# EUROPEAN PATENT SPECIFICATION

(11) **EP 0 447 807 B1**
(45) Date of publication and mention of the grant of the patent: **30.10.1996**
(21) Application number: 91102190.5
(22) Date of filing: 15.02.1991
(51) Int. Cl.: B29C 70/10, D02G 3/22, D02G 3/48, F16G 1/08, B29K 21/00, B29K 105/08

(54) **Fiber reinforced rubber**
Faserverstärkter Gummi
Caoutchouc renforcé de fibres

(30) Priority: 23.02.1990 JP 43350/90
(43) Date of publication of application: 25.09.1991
(73) Proprietor: BANDO CHEMICAL INDUSTRIES, LIMITED, Hyogo-ku Kobe-shi (JP)
(72) Inventor: Nakanishi, Yasuyuki, Bando, 3-chome, Hyogo-ku, Kobe-shi (JP); Onoe, Susumu, Bando, 3-chome, Hyogo-ku, Kobe-shi (JP); Kusakabe, Toru, Bando, 3-chome, Hyogo-ku, Kobe-shi (JP); Matsuoka, Hiroshi, Bando, 3-chome, Hyogo-ku, Kobe-shi (JP)
(74) Representative: Gauger, Hans-Peter, Dipl.-Ing.

(56) References cited:
- EP-A- 0 069 957
- EP-A- 0 206 591
- EP-A- 0 443 459
- DE-A- 3 718 193
- JP-A- 2 014 054
- JP-A-59 019 744
- US-A- 1 400 301
- US-A- 4 681 558
- PATENT ABSTRACTS OF JAPAN vol. 005, no. 183 (M-097)21 November 1981

## Description

### BACKGROUND OF THE INVENTION

The present invention relates to a fiber-reinforced rubber, and more particularly to a reinforcement embedded in a rubber of the kind as described in US-A-4 681 558. Since high Plessley tensile strength, high elasticity, high dimensional stability, and high adhesive strength has been required for rubbers such as a belt, a tire, and a hose, a reinforcing cord constructed by fibers or a reinforcing canvas is embedded in a rubber. Generally, cords of twisted yarns are used for the reinforcement. The yarns may be all twisted, only half of them twisted, or lang lay. The yarns, all of them twisted, are most popular as a reinforcement for a rubber.

However, monofilaments rub each other with sharp angle in a part of a rubber having reinforcement of the all twisted yarn and accordingly, the yarn is worn out, broken, or decreased in Plessley tensile strength from that rubbed part after short period of usage. Therefore, the flex fatigue is lowered.

Japanese Patent Application Laying Open Gazette No.59-19744 discloses a fiber-reinforced rubber where in the reinforcement is consisted of cords of which half of the yarns are twisted, or of lang lay to solve the above problem (flex fatigue).

However, a rubber reinforced by cords of only half of the yarns twisted or lang lay is lowered in elongation and rate of tensile elasticity after dipping process, comparing with a rubber reinforced by cords of all of the yarns twisted. This results in lower dimensional stability.

On the other hand, braided cords have also been used for various purposes US-A-4 681 558 thusly discloses a reinforced belt assembly comprising as a reinforcement braided cords made of metallic reinforcing member such as a cable discontinuous in length and a plurality of non-metallic carrier members braided about the same. EP-A-206 591 discloses a reinforced inorganic composite such as concrete comprising as a reinforcement braided cords made of organic,inorganic or metallic fibers and impregnated with a bonding agent.

JP-A-2 014 054 discloses braided cords being twisted of four inorganic yarns with a S-twist to the left and of four inorganic yarns with a Z-twist to the right with the use of a cord braiding machine in which the respective bobbins are rotated clockwise and anticlockwise, respectively. Cylindrically braided cords which need more than four and even numbered yarns to make a cylindrical configuration generally surpass a twisted cord in flex fatigue and dimensional stability due to their constructional characteristics. Therefore, cylindrically braided cords will improve both the flex fatigue resistance and dimensional stability if used as a reinforcement for a rubber.

Moreover, in case that a cylindrically braided cord is used for the reinforcement of a rubber, if yarns constructing the cord are twisted, the cord is arranged orderly and consequently, higher strength of a cylindrically braided cord and longer service life of a rubber is expected. If all yarns, the right twist oriented and the left twist oriented, are twisted in the same direction, the cylindrically braided cord may possess a direction. A rubber reinforced by such a cylindrically braided cord possessing a direction may not obtain, however, a satisfactory result in flex fatigue resistance.

### SUMMARY OF THE INVENTION

The object of the present invention is to use a cylindrically braided cord instead of a twisted cord for a reinforcement and to specify direction of yarns so as to provide a rubber with high flex fatigue, dimensional stability, and longer service life.

According to the present invention, the reinforcement embedded in a rubber is constructed by cylindrically braided cords comprising each four or more even numbered yarns which are right twist oriented and left twist oriented and twisted in the reverse direction with respect to each other as a S-twist to the right and a Z-twist to the left.

### BRIEF DESCRIPTION OF THE DRAWING

Fig.1 is an enlarged vertical side section of a cylindrically braided cord.

Fig.2 is an enlarged vertical front section of a cylindrically braided cord.

Fig.3 is an enlarged view of a yarn twisted to the right.

Fig.4 is an enlarged vertical front section of a toothed belt.

Fig.5 is an explanatory drawing of the testing system for a flex fatigue.

### DESCRIPTION OF THE PREFERRED EMBODIMENT

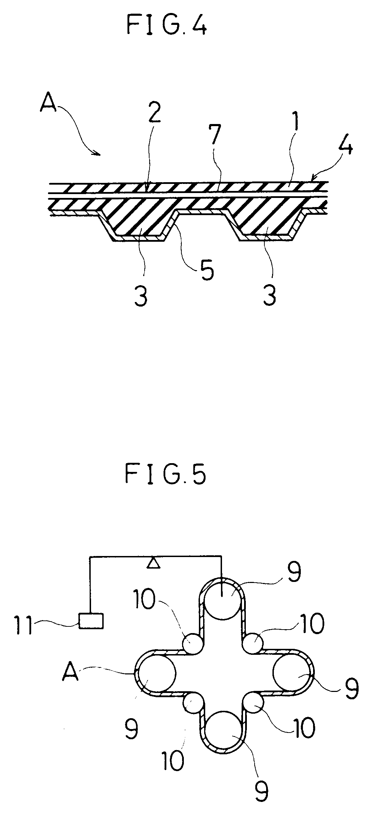

Fig.4 illustrates a toothed belt A as a fiber-reinforced rubber. The toothed belt A comprises a belt base 4 having a stretching rubber ply 1 and a plurality of teeth 3 formed on one side thereof (underside of the belt base in Fig.4) and made of the same material, a rubber, as the stretching rubber ply 1 (only two teeth are shown in Fig.4). A fiber reinforcement 2 is embedded in the stretching rubber ply 1 of the belt base 4. A canvas layer 5 is adhered to the surface of the teeth 3 of the belt base 4.

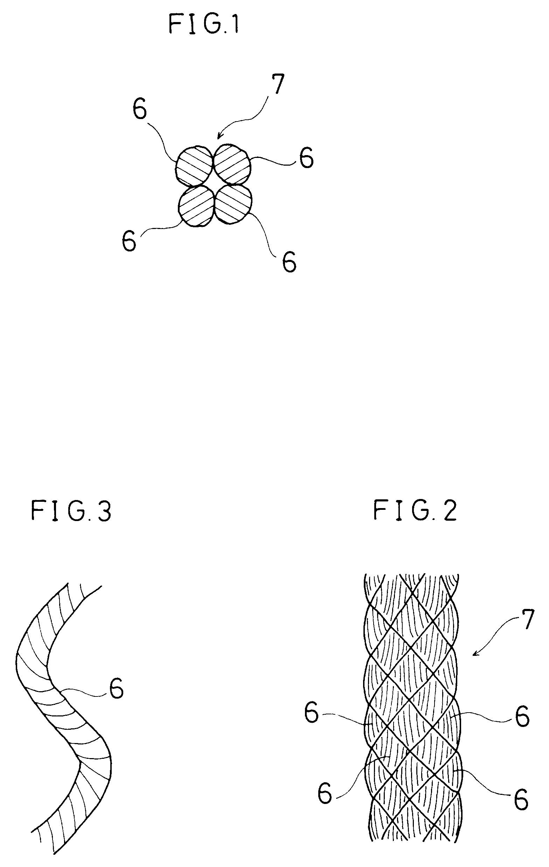

The reinforcement 2, as enlargely shown in Figs.1 and 3, is constructed by cylindrically braided cords 7 of more than four and even numbered yarns 6 (four yarns in the present embodiment). The yarns are right twist oriented and left twist oriented and twisted in the reverse direction as a S-twist and a Z-twist.

The yarns 6 may be an inorganic fiber, an organic fiber, or a metallic fiber. Further, a short or long fiber spun yarn or combination of those can be used for the yarns 6 according to the required performance of the toothed belt A. Also, the number of yarns 6 can be any even numbers if it is more than four. In order to make a cord of cylindrical configuration, more than four and even numbered yarns are required. An industrial braiding machine cannot make a cord of a cylindrical configuration by using odd numbered yarns when yarns of the same denier number are used. Also, the total denier number and the number of monofilament vary according to the required performance of the toothed belt A. The error of number of twists of the S-twist and Z-twist is set within ±20%. When the all twisted yarns or lang lay are used for the yarns 6, the twisting direction and the number of twists refer to the final twists.

The cylindrically braided cord 7 undergoes an adhesive process in which the cord is soaked into adhesive combined with epoxy resin, isocyanate compound, ethylene urea compound, and resorcin formalin latex (RFL), etc. and a stretching process before it is embedded in the stretching rubber ply 1. Dipping process is preferable for the adhesive process in order to soak adhesive evenly from surface to inside of it.

The result of a flex fatigue test is shown in Table 1, comparing the above constructed toothed belt A with a comparable example. The numerals of Table 1 show a maintainability of Plessley tensile strength of belt for the present embodiment and the comparable example.

### 〈Toothed Belt A According to the Present Invention〉

Four 1500de (the number of total denier is 6000de) Kevlar (product of DuPont) composed of aramide fibers are used for a cylindrically braided cord 7 constructing a reinforcement 2.

The right twist oriented is twisted 20 times per 10cm in S-twist and the left twist oriented is twisted 20 times per 10cm in Z-twist. In other words, the cylindrically braided cord 7 is braided by four yarns which are right twist oriented and left twist oriented and twisted in the reverse direction as S-twist and Z-twist. The cylindrically braided cord 7 used for the reinforcement 2 is dipped into the isoayanate compound so as to form a sub-coat ply, then it is dipped into the adhesive combination liquid of resorcin formalin latex (RFL) so as to form a second-coat ply, further it is dipped into chloroprene rubber so as to form a top-coat ply, and finally a stretching process is carried out with 1g/de tension. The toothed belt A wherein the reincorcement 2 composed of a plurality of the cylindrically braided cords 7 is embedded in the belt base 4 is obtained in the following steps: a plurality of cylindrically braided cords 7 finished the stretching process is put spirally on the stretching rubber ply 1 of the chloroprene rubber, and the teeth 3 of the chloroprene rubber are formed on it so that the cylindrically braided cord 7 is embedded therein, thereafter, the nylon cloth 5 is adhered to the surface of teeth 3 and the rubber is cured. The adhesive is soaked evenly from the surface to the inside of the cylindrically braided cord 7 during the adhesive process.

### 〈Toothed Belt of Comparable Example〉

The right twist oriented and left twist oriented yarns are all twisted 20 times per 10cm in Z-twist. Other features are the same as the belt of the present invention.

### 〈Test on Flex Fatigue〉

The test was carried out by the system shown in Fig.5, where the toothed belt A is wound around four large pulleys 9 and four small pulleys 10 disposed between large pulleys 9, and a predetermined tension is applied to the toothed belt A by a weight 11. The small pulleys 10 are 30mm in diameter. One cycle is defined so that the toothed belt A goes through all the four small pulleys 10, i.e., the number of belt flex by the small pulleys 10 is four.

**TABLE 1**

| | Belt Flex Number | | |
|---|---|---|---|
| | 1X10⁶ | 1X10⁷ | 1X10⁸ |
| Present Embodiment | 90.0% | 85.4% | 80.3% |
| Comparable example | 80.8% | 74.9% | 69.5% |

As shown by the test data in table 1, for example, at the belt flex number 1X10⁸, the maintainability of Plessley tensile strength of the belt of the present invention is 80.3%, which is little decrease in Plessley. However, the maintainability of Plessley of belt of the comparable example is 69.5%, which is great decrease in Plessley. This big difference between the two belts results from the right twist oriented and the left twist oriented yarns constructing the cylindrically braided cord 7 and twisted in the reverse direction as S-twist and Z-twist so that the direction of yarns is offset.

In this embodiment, the reinforcement 2 is constructed by cylindrically braided cords 7 which are made of more than four and even numbered yarns 6. The yarns 6 are right twist oriented and left twist oriented and twisted in the reverse direction with respect to each other as S-twist and Z-twist. Therefore, an even stress is applied to the monofilament composing the yarns 6 as the structual characteristic of the cylindrically braided cord 7, and the direction of the yarns is offset by the S-twist and Z-twist. This results in higher flex fatigue and longer service life of the toothed belt A. Moreover, the dimensional stability of the toothed belt A is improved in the present embodiment due to the structual characterictics of the cylindrically braided cords.

In the above embodiment, if the center cord is provided inside a hollow part of the cylindrically braided cord 7, the dimensional stability, in addition to the flex fatigue, will be improved.

The toothed belt A is shown for a rubber. However, the belt is not limited to such toothed belt A, but covers an industrial belt such as a conveyor belt and a transmission belt like a flat belt and a ribbed belt. The present invention also can be applied to rubbers other than belts, for example, tires and hoses.

## Claims

1. A fiber-reinforced rubber (1,3) having a fiber reinforcement (2) of cylindrically braided cords (7) which are embedded therein,
characterized in that said cylindrically braided cords (7) are each comprised of four or of more even numbered yarns (6) which are right twist oriented and left twist oriented and twisted in the reverse direction with respect to each other as a S-twist to the right and a Z-twist to the left.

2. A fiber-reinforced rubber according to claim 1, wherein said yarns (6) are comprised of inorganic, organic or metallic fibers.

3. A fiber-reinforced rubber according to claim 2, wherein said organic fibers are aramide fibers.

4. A fiber-reinforced rubber according to any of the claims 1 to 3, wherein said yarns (6) are comprised of long and/or short fiber spun yarns.

5. A fiber-reinforced rubber according to any of the claims 1 to 4, wherein a center cord is provided inside a hollow part of said cylindrically braided cords (7).

6. A fiber-reinforced rubber according to any of the claims 1 to 5 and forming a transmission belt (A) having a belt base that comprises a stretching rubber ply (1) and a plurality of teeth (3) which are formed on one side thereof, whereby said fiber reinforcement is embedded in said stretching rubber ply (1).

7. A fiber-reinforced rubber according to any of the claims 1 to 5 and forming a conveyor belt, a tire or a hose.

## Patentansprüche

1. Faserverstärkter Gummi (1, 3) mit einer Faserverstärkung (2) aus zylindrisch geflochtenen Schnüren (7), die darin eingebettet sind,
dadurch gekennzeichnet, daß die zylindrisch geflochtenen Schnüre (7) jeweils aus vier oder mehr geradzahligen Garnen (6) bestehen, die mit einem Rechtsdrall und mit einem Linksdrall orientiert sind und die zueinander in der Umkehrrichtung als ein S-Drall nach rechts und als ein Z-Drall nach links gedreht sind.

2. Faserverstärkter Gummi nach Anspruch 1, bei welchem die Garne (6) aus anorganischen, organischen oder metallischen Fasern bestehen.

3. Faserverstärkter Gummi nach Anspruch 2, bei welchem die organischen Fasern Aramidfasern sind.

4. Faserverstärkter Gummi nach einem der Ansprüche 1 bis 3, bei welchem die Garne (6) aus Garnen bestehen, die aus langen und/oder kurzen Fasern gesponnen sind.

5. Faserverstärkter Gummi nach einem der Ansprüche 1 bis 4, bei welchem eine zentrale Schnur innerhalb eines hohlen Teils der zylindrisch geflochtenen Schnüre (7) vorgesehen ist.

6. Faserverstärkter Gummi nach einem der Ansprüche 1 bis 5, der einen Transmissionsriemen (A) bildet, welcher eine Riemenbasis hat, die aus einer Streckgummischicht (1) und einer Vielzahl von Zähnen (3) besteht, die an deren einer Seite ausgebildet sind, wobei die Faserverstärkung in die Streckgummischicht (1) eingebettet ist.

7. Faserverstärkter Gummi nach einem der Ansprüche 1 bis 5, welcher einen Förderriemen, einen Reifen oder einen Schlauch ausbildet.

## Revendications

1. Caoutchouc (1, 3) renforcé par fibres, à renforcement (2) par fibres sous forme de cordes (7) câblées de façon cylindrique y noyées,
**caractérisé** en ce que chacune desdites cordes (7) câblées de façon cylindrique est constituée par quatre ou plus de quatre fils (6) en nombre pair, qui sont orientés à tortillon vers la droite et orientés à tortillon vers la gauche, et tordus en sens inverse l'un relativement à l'autre, comme tortillon en S vers la droite et comme tortillon en Z vers la gauche.

2. Caoutchouc renforcé par fibres selon la revendication 1, dans lequel lesdits fils (6) sont constitués par des fils en fibres inorganiques, organiques ou métalliques.

3. Caoutchouc renforcé par fibres selon la revendication 2, dans lequel lesdites fibres sont des fibres en aramide.

4. Caoutchouc renforcé par fibres selon une quelconque des revendications 1 à 3, dans lequel lesdits fils (6) sont constitués par des longues et/ou courts fils en fibres filés.

5. Caoutchouc renforcé par fibres selon une quelconque des revendications 1 à 4, dans lequel une corde centrale est prévue à l'intérieur d'une partie creuse desdites cordes (7) câblées de façon cylindrique.

6. Caoutchouc renforcé par fibres selon une quelconque des revendications 1 à 5, qui constitue une courroie de transmission (A) à une base de courroie qui comprend une couche en caoutchouc d'allongement (1) et une pluralité de dents (3) formées d'un côté de ladite base de courroie, dans lequel ledit renforcement à fibres est noyé dans ladite couche en caoutchouc d'allongement (1).

7. Caoutchouc renforcé par fibres selon une quelconque des revendications 1 à 5, qui constitue une courroie de transport, un pneumatique, ou un tuyau souple.
